# DEMANDE DE BREVET EUROPEEN

(11) **EP 3 991 803 A1**
(43) Date de publication de la demande: **04.05.2022**
(21) Numéro de dépôt: 21206090.9
(22) Date de dépôt: 02.11.2021
(51) Int. Cl.: A62C 3/07, E04H 4/00

(54) **SYSTÈME D'EXTINCTION D'UN FEU ET/OU D'EMPÊCHEMENT DE PRISE OU REPRISE D'UN FEU DE VÉHICULE ÉLECTRIQUE, PROCÉDÉ DE FONCTIONNEMENT ASSOCIÉ**

(30) Priorité: 02.11.2020 FR 2011225
(71) Demandeur: Commissariat à l'Energie Atomique et aux Energies Alternatives, 75015 Paris (FR)
(72) Inventeur: VINCENT, Rémi, 38054 GRENOBLE Cedex 09 (FR)
(74) Mandataire: Nony

(57) **Abrégé**

Système d'extinction d'un feu et/ou d'empêchement de prise ou reprise d'un feu de véhicule électrique, procédé de fonctionnement associé comprenant une étape de soulèvement préalable du véhicule du sol.

L'invention concerne un système (1) d'extinction d'un feu et/ou d'empêchement de prise ou reprise d'un feu de véhicule électrique (V) intégrant un module ou un pack-batterie comprenant une pluralité d'accumulateurs électrochimiques, notamment des accumulateurs métal-ion, comprenant :
- une structure gonflable autoportante (2), dont la forme et les dimensions à l'état déployé sont adaptées pour créer une barrière périphérique, fermée sur elle-même, autour du véhicule électrique;
- un dispositif d'alimentation en liquide (3) pour remplir au moins partiellement le volume (R) délimité à l'intérieur de la barrière périphérique de sorte à immerger au moins le module ou pack-batterie dans le liquide.

## Description

### Domaine technique

La présente invention concerne le domaine des véhicules électriques.

L'invention vise principalement à éteindre un feu et/ou à éviter une reprise d'un feu de véhicule électrique intégrant un module ou un pack-batterie à plusieurs accumulateurs électrochimiques, plus particulièrement des accumulateurs métal-ion. Un usage de l'invention à titre préventif pour réduire le risque d'une prise de feu d'un véhicule électrique, en particulier accidenté, est également possible.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Par « véhicule électrique », on entend ici et dans le cadre de l'invention, tout véhicule automobile dont la propulsion est électrique ou hybride et qui intègre au moins un module ou un pack-batterie à plusieurs accumulateurs électrochimiques, plus particulièrement des accumulateurs métal-ion.

### Technique antérieure

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou d'un défaut de fonctionnement d'une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»). Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Il a déjà été constaté un certain nombre de cas d'incendies de véhicules électriques intégrant une batterie, ou pack-batterie à plusieurs accumulateurs Li-ion, qui furent particulièrement difficiles à maitriser.

Ceci est principalement dû à la reprise du feu, des fois plusieurs heures après son extinction. Par exemple, il a été rapporté récemment le cas d'un véhicule électrique ayant pris feu dans un garage, feu maitrisé par des pompiers. Environ 4h30 après ce contrôle, une reprise du feu du véhicule a eu lieu lors de son chargement sur le véhicule de dépannage.

Une reprise du feu provient généralement d'éléments de la batterie (modules ou accumulateurs (cellules)) ayant été électriquement déconnectés, bien qu'encore chargés. Ainsi, aléatoirement, par exemple en cas de déplacement du véhicule incendié, ces éléments peuvent produire des arcs électriques susceptibles d'initier à nouveau un incendie.

Pour éviter cela, il est nécessaire d'appliquer une solution permettant pendant l'extinction de l'incendie de décharger électriquement l'intégralité d'un module ou pack-batterie d'un véhicule électrique .

Le but de l'invention est de répondre au moins en partie à ce besoin.

### Exposé de l'invention

Pour ce faire, l'invention concerne, sous l'un de ses aspects, un système d'extinction d'un feu et/ou d'empêchement de prise ou reprise d'un feu de véhicule électrique intégrant un module ou un pack-batterie comprenant une pluralité d'accumulateurs électrochimiques, notamment des accumulateurs métal-ion, comprenant :
- une structure gonflable autoportante, dont la forme et les dimensions à l'état déployé sont adaptées pour créer une barrière périphérique, fermée sur elle-même, autour du véhicule électrique;
- un dispositif d'alimentation en liquide pour remplir au moins partiellement le volume délimité à l'intérieur de la barrière périphérique de sorte à immerger au moins le module ou pack-batterie dans le liquide.

Selon une variante de réalisation avantageuse, la structure est gonflable par liquide et comprend à cet effet au moins un orifice de remplissage par liquide pour le gonflage. Avantageusement, l'orifice de remplissage est adapté pour être connecté au dispositif d'alimentation en liquide.

Selon un mode de réalisation avantageux la structure gonflable comprend une pluralité d'enveloppes souples alignées et chacune fermées sur elles-mêmes sous la forme de boudins, les boudins étant interconnectés fluidiquement dans leur partie inférieure et se déployant à la verticale lors de leur gonflage.

Avantageusement, les boudins sont régulièrement espacés entre eux, de sorte à avoir un gonflage uniforme et par là une barrière uniforme sur toute sa périphérie. Avantageusement encore, le système comprend des moyens de fixation, tels que des sangles de fixation, agencés autour de la pluralité de boudins fermée sur elle-même pour permettre un maintien mécanique et former la barrière périphérique.

Avantageusement, les moyens de fixation comprennent des bâches de recouvrement configurées de sorte à couvrir au moins en partie les interstices entre les boudins après leurs déploiements.

Selon un autre mode de réalisation avantageux, la structure gonflable comprend en outre une bâche d'étanchéité souple qui s'étend depuis la partie inférieure des boudins et en configuration installée, vers l'intérieur de la barrière. L'étanchéité peut être apportée par une masse de liquide à l'intérieur du volume délimité par la barrière, qui appuie sur bâche, ainsi que la masse des boudins. Cette bâche d'étanchéité est une surface spécialement déformable sous les boudins afin d'épouser au plus près le revêtement du sol. L'étanchéité parfaite n'est pas nécessaire, l'objectif étant d'immerger le module ou pack-batterie du véhicule sans avoir à déplacer ce dernier, il suffit que le débit de fuite soit plus faible que le débit d'admission d'eau.

Avantageusement, la bâche d'étanchéité souple n'est pas continue le long de la barrière périphérique. La bâche d'étanchéité souple peut s'étendre le long d'une ligne courbe non fermée sur elle-même. La bâche d'étanchéité souple peut ainsi être facilement mise en place autour du véhicule sans devoir déplacer celui-ci.

Selon une variante particulièrement avantageuse, au moins une partie des boudins comprend dans leur partie supérieure un orifice débouchant, tel qu'en configuration déployée à la verticale, à l'issue de leur gonflage par le liquide, ce dernier remplisse par débordement depuis les boudins le volume délimité à l'intérieur de la barrière.

Le liquide de remplissage du volume étanche est avantageusement de l'eau.

Dans ce cas, le système comprend avantageusement des sels solubles dans l'eau, positionnés préalablement au sein d'au moins une zone de la structure à l'état non déployée de sorte que lesdits sels sont en contact avec l'eau lors du remplissage du volume étanche (R).

De préférence, la structure gonflable est au moins en partie constituée d'un tissu à base de fibres d'aramide. Un tel tissu est particulièrement adapté pour faire résister aux flammes la structure, lors de son installation.

De préférence encore, le tissu étant étanchéifié au moins dans sa partie intérieure destinée à être en contact avec le liquide par un film en polytétrafluoroéthylène (PTFE).

Le dispositif d'alimentation en liquide est avantageusement un véhicule de lutte contre l'incendie, notamment un camion-citerne, un véhicule d'intervention. Ainsi, des pompiers intervenant pour un feu de véhicule électrique disposent d'un système complètement autonome, la structure gonflable pouvant être aisément embarqué à bord d'un véhicule et donc déployée très rapidement in situ.

L'invention a également pour objet un procédé de fonctionnement d'un système qui vient d'être décrit, comprenant les étapes suivantes :
i/ positionnement et fermeture sur elle-même de la structure gonflable autour d'un véhicule électrique ;
ii/ gonflage de la structure de sorte à créer la barrière périphérique ;
iii/ remplissage par un liquide depuis le dispositif d'alimentation, d'au moins une partie du volume délimité à l'intérieur de la barrière périphérique afin d'immerger au moins le module ou pack-batterie.

Selon un mode de réalisation avantageux, les étapes ii/ et iii/ sont réalisées l'une après l'autre au moyen du seul dispositif d'alimentation, l'étape iii/ étant réalisée par débordement depuis les boudins de la structure une fois gonflés.

Avantageusement, on utilise de l'eau, éventuellement contenant des sels, en tant que liquide de gonflage et de remplissage à la fois pour l'étape ii/ et l'étape iii/. Des sels augmentent avantageusement la conductivité de l'eau et donc garantissent une décharge électrique du module ou pack-batterie une fois immergé. Afin de simplifier le travail des intervenants sur un feu, notamment des pompiers, les sels peuvent être directement contenus dans la structure gonflable, notamment les boudins, ce qui permet dans la configuration où l'eau sert au gonflage puis au remplissage du volume d'immersion une dilution efficace lors de l'ajout de l'eau.

Ainsi, l'invention consiste essentiellement en un système qui réalise l'extinction d'un feu d'un véhicule électrique et empêche toute prise ou reprise de feu au moyen d'une structure gonflable autoportante, qui en configuration gonflée et fermée sur elle-même, forme une barrière autour du véhicule dont le volume intérieur qui y est délimité est immergé par un liquide assurant la décharge électrique du module ou du pack-batterie du véhicule.

La structure souple gonflable permet aux intervenants, en particulier aux pompiers, d'éviter de transporter des bacs de rétention rigides particulièrement imposants et nécessitant des moyens de levage de véhicule.

Cette structure devient autoportante par le gonflage qui est avantageusement réalisée par le même liquide depuis le dispositif d'alimentation, qui peut remplir le volume délimité par la barrière par débordement depuis la structure déployées.

Les avantages de l'invention sont nombreux parmi lesquels on peut citer :
- un système simple, facile et rapide à mettre en œuvre autour d'un véhicule électrique en feu ;
- une structure gonflable qui peut être embarquée rapidement et déployée aisément et rapidement depuis un véhicule d'intervention, tel qu'un camion-citerne ou un camion de pompiers ;
- la garantie d'une extinction de feu et d'empêchement de toute reprise par la décharge électrique induite par l'immersion du module ou du pack-batterie du véhicule électrique. D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en perspective et en coupe d'un système d'extinction de feu et d'empêchement de reprise de feu selon l'invention, tel qu'il est en configuration installée autour d'un véhicule électrique, avec une connexion à un véhicule de pompiers en tant que dispositif d'alimentation en eau pour immerger au moins le pack-batterie du véhicule.
[Fig 2] est une vue de dessus montrant la structure autoportante d'un système selon l'invention en configuration installée autour d'un véhicule électrique.

### Description détaillée

Les termes « inférieur », « supérieur », « dessus », « dessous », sont à comprendre par rapport à une structure autoportante dans sa configuration gonflée et installée, qui s'étend à la verticale en créant une barrière périphérique fermée sur elle-même.

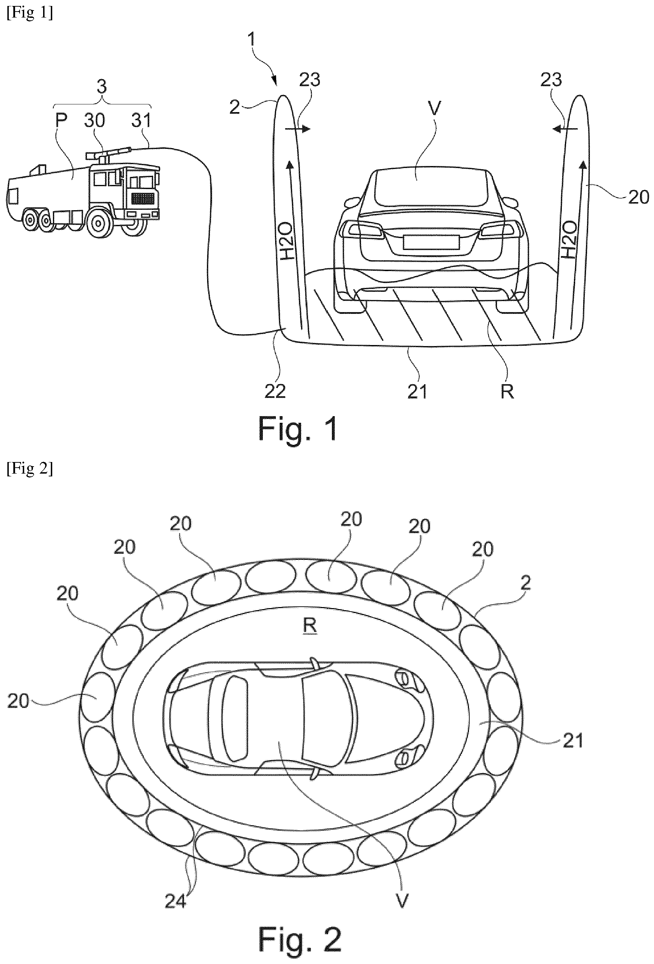

Les figures 1 et 2 montrent un système 1 selon l'invention qui permet l'extinction d'un feu de véhicule électrique et empêche toute reprise de feu de ce dernier.

Le système 1 comprend une structure autoportante 2 constituée d'une pluralité d'enveloppes souples alignées et chacune fermées sur elles-mêmes sous la forme de boudins 20, les boudins étant interconnectés fluidiquement dans leur partie inférieure.

Les boudins 20 sont régulièrement espacés entre eux de sorte à avoir un gonflage uniforme. La structure 2 comprend également une bâche d'étanchéité souple 21 qui s'étend depuis la partie inférieure des boudins 20 pour épouser au plus près le revêtement du sol. Les boudins 20 et la bâche 21 sont avantageusement constitués d'un tissu à base de fibres d'aramide revêtus au moins sur leur partie intérieure destinée à être en regard du véhicule V par un film en polytétrafluoroéthylène (PTFE).

La bâche d'étanchéité souple 21 s'étend le long d'une ligne courbe qui n'est pas fermée sur elle-même ce qui facilite l'installation de ladite bâche 21 autour du véhicule V. Une fois installée, la bâche 21 s'étend depuis la partie inférieure des boudins 20 vers le véhicule V sans être disposée sous ce véhicule V. La mise en place de la bâche 21 ne nécessite donc pas de déplacer le véhicule V.

Au moins une partie des boudins 20 comprend dans leur partie inférieure un orifice d'alimentation 22 qui est connectée à un dispositif 3 d'alimentation en eau. Comme montré en figure 1, ce dispositif 3 d'alimentation peut être un camion de pompier P relié à l'orifice d'alimentation 22 depuis a lance à incendie 30 par un tuyau adapté 31.

Au moins une partie des boudins 20 comprend également dans leur partie supérieure un orifice débouchant 23.

Des moyens de fixation 24, tels que des sangles de fixation pouvant comprendre des bâches de recouvrement pour améliorer l'étanchéité latérale, agencés autour de la pluralité de boudins fermée sur elle-même permettent un maintien mécanique afin de créer la barrière périphérique fermée sur elle-même.

Le fonctionnement du système est le suivant.

Etape i/ : Un intervenant, notamment un pompier vient positionner la structure 2 à boudins 20 autour d'un véhicule électrique en feu ou dont le feu vient d'être éteint. Il positionne également la bâche d'étanchéité 21 sur le sol vers l'intérieur de la périphérie de la structure, c'est-à-dire de sorte à ce qu'elle s'étende vers le véhicule électrique.

La mise en place des sangles de fixation et éventuelle bâche 24 permet de fermer la structure 2 sur elle-même autour du véhicule V.

Etapes ii/ et iii/: une fois le dispositif d'alimentation en eau 3 connecté à l'orifice d'alimentation 22 des boudins 20, on alimente en eau ces derniers.

Cela provoque dans un premier temps, le gonflage des boudins 20 qui se déployent à la verticale et assure l'autoportance de la structure 2 tout en créant une barrière périphérique autour du véhicule V, qui délimite un volume intérieur ou réservoir R.

Une fois que l'eau a atteint le ou les orifices débouchant 23, elle déborde des boudins vers le réservoir R. Le réservoir R étant par ailleurs étanche, notamment grâce à la bâche 21, il se remplit donc d'eau. Il est à noter que l'étanchéité recherchée peut ne pas être parfaite, il suffit qu'à travers la barrière crée par la structure gonflée autoportante 2, le débit de fuite soit plus faible que le débit d'admission d'eau.

La bâche 21 appuie sur le sol sous-jacent, sous la masse de liquide contenu dans le réservoir R et la masse du liquide contenu dans les boudins 20. La bâche 21 augmente ainsi l'étanchéité de la barrière périphérique et limite les fuites du liquide par dessous les boudins 20.

Le remplissage du réservoir R est réalisé jusqu'à que l'immersion au moins du module ou du pack-batterie équipant le véhicule V soit réalisée.

L'immersion obtenue permet de garantir à coup sûr la décharge électrique du module ou pack-batterie du véhicule V et par là permet d'empêcher toute prise ou reprise de feu.

Des sels solubles peuvent être positionnés dans le système, qui une fois mis en solution par l'apport d'eau permettent une décharge plus efficace et rapide du module ou pack-batterie. Il peut s'agir par exemple de sels solides NaCl.

Ces sels peuvent être ajoutés dans le réservoir R par les utilisateurs, par exemple les pompiers, une fois la structure gonflable mise en place et avant ou pendant le remplissage de celle-ci. Afin d'éviter cette étape d'ajout et rendre ainsi l'intervention plus simple, ces sels peuvent également être déjà présents sous forme solide dans la structure repliée, avant son déploiement et gonflage, par exemple placés dans le « »liner» » (jupe) ou sur la face externe des boudins faisant partie de l'espace R et en contact avec l'eau de remplissage. Dans le cas d'un remplissage par eau avec débordement des boudins périphériques 20, les sels peuvent être directement positionnés au sein des boudins 20. Dans ce dernier cas, les sels sont solubilisés lors du remplissage par l'eau des boudins, la solution se déversant ensuite dans le réservoir R par les ouvertures supérieures 24 des boudins.

D'autres variantes et améliorations peuvent être envisagées sans pour autant sortir du cadre de l'invention.

Par exemple, si dans l'ensemble des exemples illustrés, la structure gonflable autoportante est constituée d'une pluralité de boudins gonflés à l'eau d'immersion du pack-batterie du véhicule électrique, toute autre structure gonflable pour créer une barrière périphérique que l'on peut mettre aisément autour du véhicule et qui peut être gonflée, soit à l'air soit par un liquide qui sert également à l'immersion du pack-batterie peut tout-à-fait convenir.

## Revendications

1. Système (1) d'extinction d'un feu et/ou d'empêchement de prise ou reprise d'un feu de véhicule électrique (V) intégrant un module ou un pack-batterie comprenant une pluralité d'accumulateurs électrochimiques, notamment des accumulateurs métal-ion, comprenant :
- une structure gonflable autoportante (2), dont la forme et les dimensions à l'état déployé sont adaptées pour créer une barrière périphérique, fermée sur elle-même, autour du véhicule électrique, la structure gonflable comprenant une pluralité d'enveloppes souples alignées et chacune fermées sur elles-mêmes sous la forme de boudins (20), les boudins étant interconnectés fluidiquement dans leur partie inférieure et se déployant à la verticale lors de leur gonflage ;
- un dispositif d'alimentation en liquide (3) pour remplir au moins partiellement le volume (R) délimité à l'intérieur de la barrière périphérique de sorte à immerger au moins le module ou pack-batterie dans le liquide.

2. Système selon la revendication 1, la structure comprenant au moins un orifice de remplissage (22) par liquide pour le gonflage.

3. Système selon la revendication 2, l'orifice de remplissage étant adapté pour être connecté au dispositif d'alimentation en liquide.

4. Système selon la revendication 3, au moins une partie des boudins comprenant dans leur partie supérieure un orifice débouchant (23), tel qu'en configuration déployée à la verticale, à l'issue de leur gonflage par le liquide, ce dernier remplisse par débordement depuis les boudins le volume délimité à l'intérieur de la barrière.

5. Système selon l'une des revendications précédentes, les boudins étant régulièrement espacés entre eux de sorte à avoir un gonflage uniforme et par là une barrière uniforme sur toute sa périphérie.

6. Système selon l'une des revendications précédentes, comprenant des moyens de fixation (24), tels que des sangles de fixation, agencés autour de la pluralité de boudins fermée sur elle-même pour permettre un maintien mécanique afin de créer la barrière périphérique.

7. Système selon la revendication précédente, les moyens de fixation comprenant des bâches de recouvrement configurées de sorte à couvrir au moins en partie les interstices entre les boudins après leurs déploiements.

8. Système selon l'une des revendications précédentes, la structure gonflable comprenant en outre une bâche d'étanchéité souple (21) qui s'étend depuis la partie inférieure des boudins et en configuration installée, vers l'intérieur de la barrière.

9. Système selon l'une des revendications précédentes, le liquide de remplissage du volume (R) étant de l'eau.

10. Système selon la revendication 8, comprenant des sels solubles dans l'eau positionnés préalablement au sein d'au moins une zone de la structure à l'état non déployée de sorte que lesdits sels sont en contact avec l'eau lors du remplissage du volume (R).

11. Système selon l'une des revendications précédentes, la structure gonflable étant au moins en partie constituée d'un tissu à base de fibres d'aramide.

12. Système selon la revendication 10, le tissu étant étanchéifié au moins dans sa partie intérieure destinée à être en contact avec le liquide par un film en polytétrafluoroéthylène (PTFE).

13. Système selon l'une des revendications précédentes, le dispositif d'alimentation en liquide étant un véhicule de lutte contre l'incendie, notamment un camion-citerne, un véhicule d'intervention.

14. Procédé de fonctionnement d'un système selon l'une des revendications précédentes, comprenant les étapes suivantes :
i/ positionnement et fermeture sur elle-même de la structure gonflable autour d'un véhicule électrique ;
ii/ gonflage de la structure de sorte à créer la barrière périphérique ;
iii/ remplissage par un liquide depuis le dispositif d'alimentation, d'au moins une partie du volume délimité à l'intérieur de la barrière périphérique afin d'immerger au moins le module ou pack-batterie.

15. Procédé selon la revendication 13, le système étant selon la revendication 3 ou selon l'une des revendications 4 à 12 prise en dépendance avec la revendication 3, les étapes ii/ et iii/ étant réalisées l'une après l'autre au moyen du seul dispositif d'alimentation, l'étape iii/ étant réalisée par débordement depuis la structure une fois gonflée.

16. Procédé selon la revendication 13 ou 14, selon lequel on utilise de l'eau, éventuellement contenant des sels, en tant que liquide de remplissage pour l'étape ii/ et l'étape iii/.
